## Europäisches Patentamt

## European Patent Office

## Office européen des brevets

(11) Veröffentlichungsnummer: **0 338 991**
**A1**

(12) **EUROPÄISCHE PATENTANMELDUNG**

(21) Anmeldenummer: 89810286.8

(22) Anmeldetag: 13.04.89

(51) Int. Cl.⁴: **G 02 C 13/00**
**A 61 L 2/00**

(30) Priorität: 22.04.88 CH 1522/88

(43) Veröffentlichungstag der Anmeldung:
25.10.89 Patentblatt 89/43

(84) Benannte Vertragsstaaten:
**CH DE ES FR GB IT LI NL SE**

(71) Anmelder: **CIBA-GEIGY AG**
**Klybeckstrasse 141**
**CH-4002 Basel (CH)**

(72) Erfinder: **Steinburg, Heinz**
**Kitzbüheler Weg 4**
**D-4019 Monheim 2 (DE)**

(54) **Reinigungs- und Pflegevorrichtung für Kontaktlinsen.**

(57) Auf einem becherförmigen Behandlungsbehälter (1) ist eine Verschlusskappe (2) aufgeschraubt, von der sich ein Träger (6) in den Behälter (1) hineinerstreckt. Auf dem Träger sind zwei korbartige Halterungen (7 - 9) für je eine Kontaktlinse (L) befestigt. Die Halterungen sind mit aufklappbaren Deckeln (8, 9) versehen und weisen gekrümmte Aufnahmeräume (22, 23) für die Kontaktlinsen (L) auf, wobei die Anordnung dieser Aufnahmeräume vorzugsweise so getroffen ist, dass die Kontaktlinsen einander mit ihren konvexen Aussenseiten zugewandt sind. Dadurch und/oder durch unsymmetrische Verteilung der Adhäsion (Haftung) auf die konvexen und konkaven Wände der Halterungen (7 - 9) wird erreicht, dass die Kontaktlinsen nach dem Oeffnen der Halterungen stets mit ihren konkaven Innenseiten an den konvexen Wandteilen der Halterungen anliegen und sich daher dem Benutzer gebrauchsfertig mit ihren konvexen Aussenseiten darbieten.

Fig. 1

**Beschreibung**

## Reinigungs- und Pflegevorrichtung für Kontaktlinsen

Die Erfindung betrifft eine Reinigungs- und Pflegevorrichtung für Kontaktlinsen gemäss dem Oberbegriff des Patentanspruchs 1.

Derartige Vorrichtungen existieren in zahlreichen Varianten. Ein repräsentatives Beispiel ist in der EP-A-155 505 beschrieben. Ein Nachteil dieser bekannten Vorrichtungen besteht darin, dass die Kontaktlinsen bei der Entnahme aus ihren Halterungen verkehrt herum liegen, d.h. sich dem Benutzer mit ihren konkaven Innenseiten darbieten, was aus vielerlei Gründen unerwünscht ist.

Es ist demnach Aufgabe der vorliegenden Erfindung, eine Vorrichtung der gattungsgemässen Art diesbezüglich zu verbessern, d.h. zu erreichen, dass sich die Kontaktlinsen bei der Entnahme dem Benutzer mit ihren konvexen Seiten darbieten, so dass sie gebrauchsfertig vorliegen.

Die erfindungsgemässe Vorrichtung, die diese Aufgabe löst, ist im unabhängigen Anspruch definiert. Besonders vorteilhafte Ausgestaltungen und Weiterbildungen ergeben sich aus den abhängigen Ansprüchen.

Im folgenden wird die Erfindung anhand der Zeichnung näher erläutert. Es zeigen:

Fig. 1 einen Axialschnitt durch ein erstes Ausführungsbeispiel der erfindungsgemässen Vorrichtung,

Fig. 2 eine Detailansicht aus Fig. 1 in Gebrauchslage,

Fig. 3 eine Schnittansicht der erfindungswesentlichen Elemente eines zweiten Ausführungsbeispiels,

Fig. 4 eine Detailvariante in einer Ansicht gemäss Pfeil IV in Fig. 3 und

Fig. 5 einen Axialschnitt durch den Oberteil eines dritten Ausführungsbeispiels.

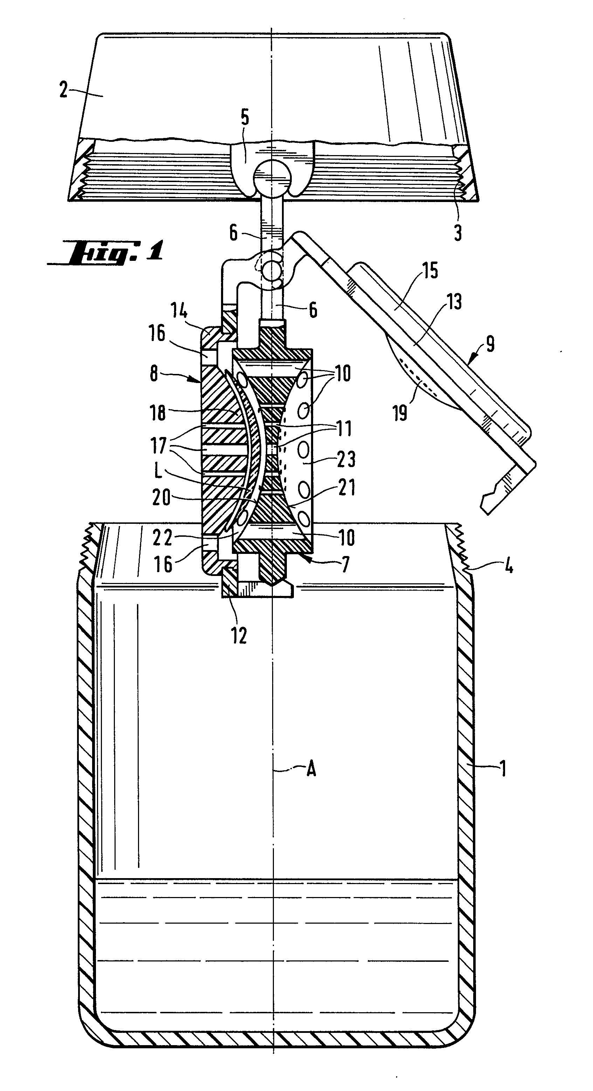

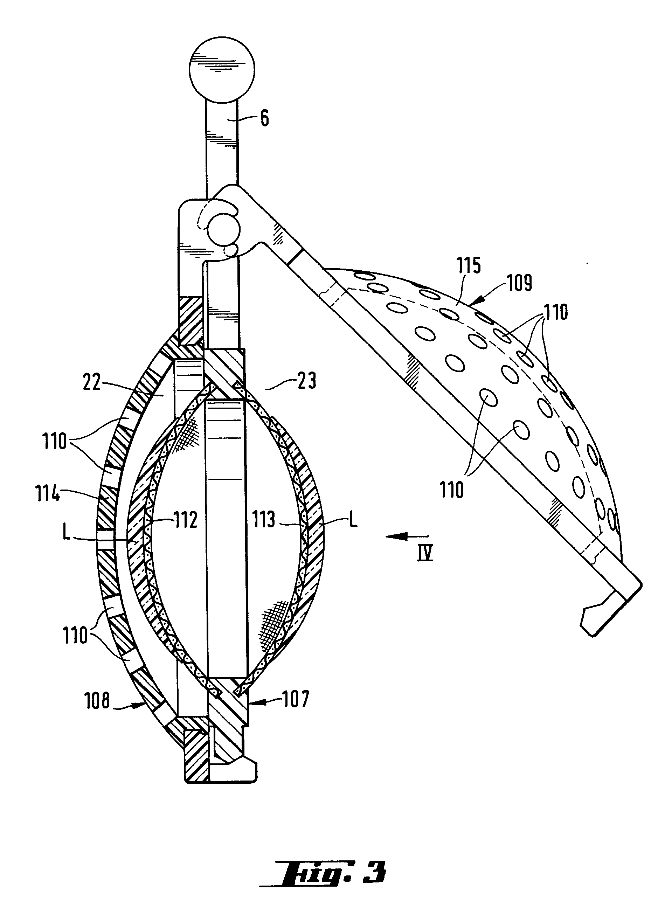

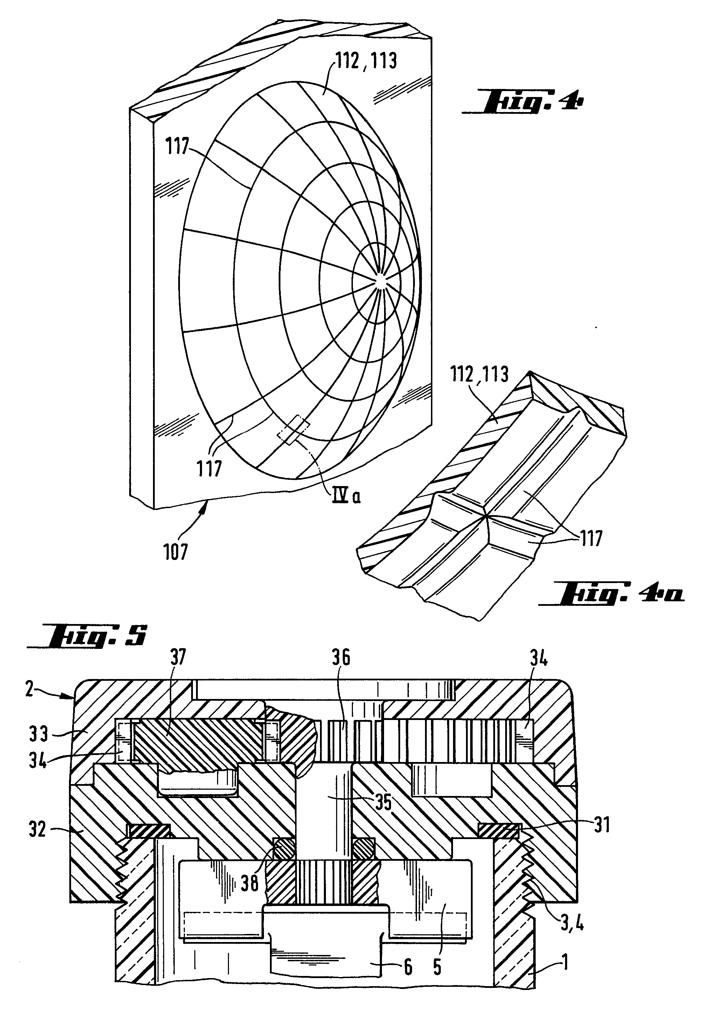

Die in den Figuren dargestellte Reinigungs- und Pflegevorrichtung umfasst im wesentlichen einen becherförmigen Behälter 1 aus vorzugsweise durchsichtigem Kunststoff zur Aufnahme einer Kontaktlinsen-Behandlungsflüssigkeit und eine Verschlusskappe 2, die vorzugsweise schraubbar (Gewinde 3, 4) oder mittels Bajonett-Verschluss dicht am Behälter 1 befestigbar ist. An der Verschlusskappe 2 ist entweder fest (Fig. 1) oder drehbar (Fig. 5) mit ihr verbunden ein Lager 5 angeordnet, welches einen Träger 6 um eine zur Achse A der Vorrichtung senkrechte Achse schwenkbar aufnimmt. Am freien Ende des Trägers 6 ist ein durchbrochener Einsatz 7 angeordnet, der zusammen mit zwei am Träger schwenkbar angelenkten, ebenfalls durchbrochenen Klappdeckeln 8, 9 zwei korbartige Halterungen für je eine Kontaktlinse L bildet.

Soweit entspricht die erfindungsgemässe Vorrichtung in Aufbau und Funktionsweise/Handhabung voll und ganz der Vorrichtung nach z.B. EP-A-155 505, so dass eine nähere Erläuterung nicht erforderlich ist.

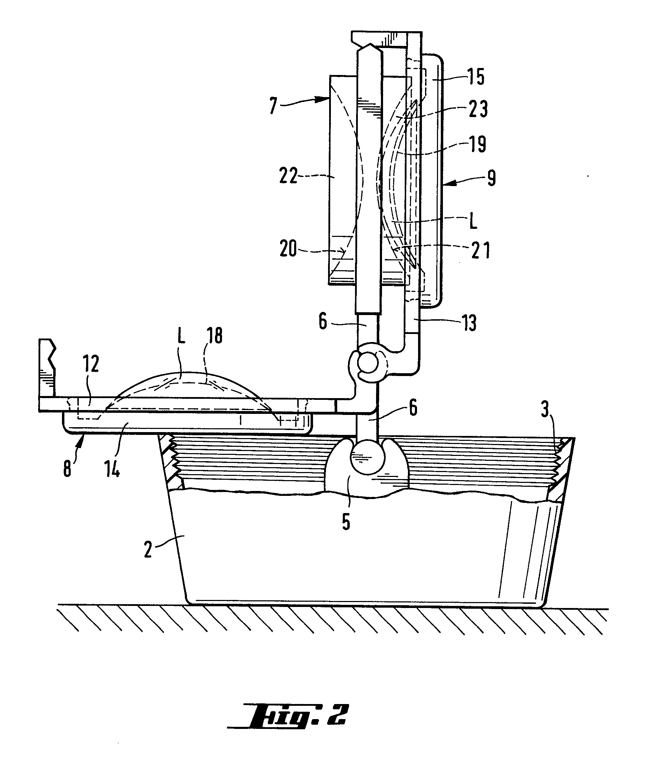

Gegenüber dem bekannten Stand der Technik unterscheidet sich das Ausführungsbeispiel nach Fig. 1 und 2 vor allem in der Ausbildung der korbartigen Halterungen 7 - 9. Der im Träger 6 gefasste Einsatz 7 hat in etwa die Gestalt einer symmetrischen Bikonkav-Linse und ist mit zahlreichen Durchflussöffnungen 10 und 11 versehen. Die Klappdeckel 8 und 9 bestehen je aus einem am Träger 6 schwenkbar angelenkten Rahmen 12 bzw. 13 und einem in diesem befestigten Deckeleinsatz 14 bzw. 15. Die Deckeleinsätze sind ebenfalls mit zahlreichen Durchtrittsöffnungen 16 und 17 versehen und weisen einen vom Träger 6 bzw. dessen Einsatz 7 aus gesehen konvex gewölbten Wandteil 18 bzw. 19 auf. Diese konvex gekrümmten Wandteile 18 und 19 bilden zusammen mit den durch die konkaven Begrenzungsflächen 20 und 21 des Einsatzes 7 definierten konkav gekrümmten Wandteilen zwei gekrümmte, der allgemeinen Form von Kontaktlinsen angepasste Aufnahmeräume 22 und 23 für je eine der zu behandelnden Kontaktlinsen L, wobei im Unterschied zum Stand der Technik die Kontaktlinsen L so zu liegen kommen, dass sie mit ihren konvexen Aussenseiten einander zugewandt wind.

Der Vorteil dieser gegenüber den herkömmlichen Vorrichtungen "verkehrten" Anordnung der Kontaktlinsen ist unmittelbar aus der in Fig. 2 dargestellten Detailskizze zu erkennen, welche den Entnahmevorgang der Kontaktlinsen L nach erfolgter Behandlung zeigt. Der Deckel 2 wird dazu vom Behälter 1 abgeschraubt und um etwa 180° gedreht, so dass der Träger 6 mit den Kontaktlinsenhalterungen 7 - 9 nach oben zeigt. Dann werden die Klappdeckel 8 und 9 geöffnet und die Kontaktlinsen L einzeln entnommen. Aufgrund der erfindungsgemässen Ausgestaltung der Halterungen liegen die Kontaktlinsen dabei mit ihren konkaven Innenseiten auf den konvex gekrümmten Wandteilen 18, 19 der Halterungen auf und präsentieren sich daher dem Benutzer gebrauchsbereit mit ihren konvexen Aussenseiten.

Ein wesentliches Merkmal der vorliegenden Erfindung besteht also darin zu gewährleisten, dass die Kontaktlinsen bei der Entnahme "richtig herum", d.h. mit ihren konvexen Aussenseiten dem Benutzer zugewandt zu liegen kommen. Gemäss dem in Fig. 3 nur im Detail gezeigten Ausführungsbeispiel der Erfindung kann dies auch bei herkömmlicher Anordnung der Kontaktlinsen L erreicht werden. Bei diesem Ausführungsbeispiel ist der Einsatz 107 bikonvex ausgebildet und die beiden Einsätze 114 und 115 der Klappdeckel 108 und 109 sind entsprechend konkav. Die Einsätze 114 und 115 sind mit einer Vielzahl von Durchtrittsöffnungen 110 versehen, welche die Zirkulation der Behandlungsflüssigkeit beim Betrieb der Vorrichtung ermöglichen.

Ohne besondere Massnahmen würden die Kontaktlinsen L beim Oeffnen der Halterungen analog Fig. 2 in die Klappdeckel 108 und 109 fallen und damit verkehrt herum liegen, sich dem Benutzer also mit ihren konkaven Innenseiten präsentieren. Gemäss einem Grundgedanken der Erfindung ist nun aber dafür gesorgt, dass die Kontaktlinsen L mit ihren konkaven Innenseiten auf den konvexen Wandteilen der Halterungen, in diesem Fall also an den konvexen Oberflächen des Einsatzes 107 haften bleiben. Zu diesem Zweck sind die konvexen Wandteile 112 und 113 des Einsatzes 107 so ausgebildet, dass sie eine höhere Adhäsion bzw. Haftfähigkeit gegenüber den zu behandelnden Kontaklinsen aufweisen als die konkaven Wandteile. Dies kann z.B. dadurch erreicht werden, dass die konvexen Wandteile 112 und 113 so ausgebildet werden, dass sie eine bessere Benetzbarkeit durch die zum Einsatz gelangende Behandlungsflüssigkeit aufweisen. Dies wiederum lässt sich auf mannigfaltige Art und Weise realisieren. So können die Wandteile 112 und 113 beispielsweise, wie in Fig. 3 dargestellt, als feine Maschensiebe ausgestaltet sein, wobei in deren Poren die Flüssigkeit aufgrund von Kapillareffekten haften bleibt. Alternativ kann die Oberfläche der konvexen Wandteile gemäss Fig. 4 mit feinen Rillen 117 versehen oder sonstwie (mikro-)strukturiert werden, um Kapillareffekte zu erzielen, welche die Benetzbarkeit und damit schliesslich die Haftwirkung erhöhen. Die Oberflächenstrukturierung kann z.B. durch Plasma-Behandlung erfolgen. Anstatt der oder auch zusätzlich zur Strukturierung kann die Oberfläche der Wandteile 113 und 114 auch mit einer die Benetzbarkeit verbessernden Beschichtung versehen werden. Eine weitere Variante besteht darin, die Wandteile so auszugestalten, dass die konkaven Wandteile wesentlich weniger Kontaktfläche zu den Kontaktlinsen aufweisen als die konvexen Wandteile, um so das Anhaften an den letzteren zu begünstigen. Schliesslich kann die gewünschte Asymmetrie der Haftfähigkeiten auch durch geeignete Auswahl und Abstimmung der Konstruktionsmaterialien erreicht werden. Im übrigen kann diese unsymmetrische Verteilung der Haftwirkung auch beim Ausführungsbeispiel nach Fig. 1 sinngemäss angewandt werden und dessen Zuverlässigkeit noch steigern.

Wie schon erwähnt, können das Lager 5 und damit der Träger 6 und die Halterungen 7 - 9 auch drehbar in der Verschlusskappe 2 angeordnet sein. Fig. 5 zeigt eine solche Anordnung, wie sie z.B. von der EP-A-155 505 her bekannt ist.

Die auf den Behälter 1 aufgeschraubte und mittels eines Dichtrings 31 abgedichtete Verschlusskappe 2 ist hier zweiteilig ausgebildet und umfasst einen Basiskörper 32 und einen auf diesem koaxial drehbar befestigten Teil 33, der mit einem inneren Zahnkranz 34 versehen ist. Im Basiskörper 32 ist eine Welle 35 koaxial drehbar gelagert und mittels eines O-Rings 36 abgedichtet. Die Welle 35 trägt einerseits das Lager 5 und anderseits ein Ritzel 36, welches mit einem im Basiskörper 32 frei drehbaren Zahnrad 37 kämmt, das seinerseits wieder in den Zahnkranz 34 des drehbaren Teils 33 eingreift. Zahnkranz 34, Zahnrad 37 und Ritzel 36 bilden zusammen ein Planetengetriebe mit einer Uebersetzung von etwa 1 : 2.

Mit dieser Anordnung wird eine intensive Behandlungswirkung erzielt, wobei allerdings relativ viel Behandlungsflüssigkeit benötigt wird. Mit weniger Behandlungsflüssigkeit kann man auskommen, wenn die Vorrichtung als Ganzes von Hand geschüttelt wird, wobei sich ebenfalls eine intensive Wechselwirkung zwischen Behandlungsflüssigkeit und Kontaktlinsen ergibt.

**Patentansprüche**

1. Reinigungs- und Pflegevorrichtung für Kontaktlinsen mit einem Behälter (1) zur Aufnahme einer Kontaktlinsen-Behandlungsflüssigkeit und einer mit diesem lösbar verbundenen, vorzugsweise schraubbar ausgebildeten Verschlusskappe (2), an der ein sich in den Behälter hinein erstreckender Träger (6) befestigt ist, an dessen freiem Ende zwei korbartige Halterungen (7, 8, 9; 107, 108, 109) für je eine Kontaktlinse (L) angeordnet sind, welche Halterungen je einen in Bezug auf die zu haltende Kontaktlinse konkav und einen konvex gekrümmten Wandteil (18 - 21; 112 - 115) umfassen, die zwischen sich einen im wesentlichen der Form von Kontaktlinsen angepassten Aufnahmeraum (22, 23) für die Kontaktlinse bilden, wobei jeweils einer der beiden Wandteile (18, 19; 114, 115) der Halterungen (7, 8, 9; 107, 108, 109) zum Oeffnen und Schliessen derselben beweglich, insbesondere aufklappbar angeordnet ist, dadurch gekennzeichnet, dass die Halterungen (7, 8, 9; 107, 108, 109) so ausgebildet sind, dass die in ihnen befindlichen Kontaktlinsen (L) nach dem Oeffnen der Halterungen mit ihren konkaven Innenseiten in Anlage mit den konvex gekrümmten Wandteilen (18, 19; 112, 113) bleiben, sodass sie sich dem Benutzer mit ihren konvexen Aussenseiten präsentieren.

2. Vorrichtung nach Anspruch 1, dadurch gekennzeichnet, dass die konvex gekrümmten Wandteile (18, 19; 112, 113) so ausgebildet sind, dass sie eine stärkere Haftwirkung auf die Kontaktlinsen (L) aufweisen als die konkav gekrümmten Wandteile (20, 21; 114, 115).

3. Vorrichtung nach Anspruch 2, dadurch gekennzeichnet, dass die konvex gekrümmten Wandteile (18, 19; 112, 113) eine bessere Benetzbarkeit gegenüber der Behandlungsflüssigkeit aufweisen als die konkav gekrümmten Wandteile (20, 21; 114, 115).

4. Vorrichtung nach Anspruch 3, dadurch gekennzeichnet, dass die konvexen Wandteile (18, 19; 112, 113) eine einen Kapillareffekt erzeugende Strukturierung und/oder eine die Benetzbarkeit erhöhende Beschichtung aufweisen.

5. Vorrichtung nach einem der Ansprüche 1 - 4, dadurch gekennzeichnet, dass die beweglich, insbesondere aufklappbar angeordneten Wandteile die konvex gekrümmten Wandteile (18, 19) sind, so dass die Konkavseiten der Aufnahmeräume (22, 23) der Halterungen (7 - 9) vom Träger (6) weg nach aussen zeigen.

6. Vorrichtung nach einem der Ansprüche 1 - 5, dadurch gekennzeichnet, dass die Verschlusskappe (2) einen von aussen drehbaren Teil (33) aufweist, und dass der Träger (6) mit diesem drehbaren Teil verbunden und relativ zum Behälter (1) drehbar ist.

7. Vorrichtung nach Anspruch 6, dadurch gekennzeichnet, dass der Träger (6) mit dem drehbaren Teil (33) über ein Planetengetriebe (34, 36, 37) kinematisch verbunden ist.

**Fig. 1**

**Fig. 2**

*Fig: 3*

**Fig. 4**

**Fig. 4a**

**Fig. 5**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 155 505  (TITMUS EUROCON KONTAKTLINSEN)<br>* Seite 9, Figur 1 * | 1 | G 02 C  13/00<br>A 61 L   2/00 |
| A | | 6,7 | |
| Y | FR-A-2 305 749  (G. GLORIEUX)<br>* Seite 4, Zeilen 14-36; Seiten 5-7 * | 1 | |
| | --- | | |
| A | US-A-3 822 780  (W.R. ULMER) | | |
| | --- | | |
| A | US-A-4 332 318  (M.A. FELDMAN) | | |
| | ----- | | |

RECHERCHIERTE
SACHGEBIETE (Int. Cl.4)

G 02 C  13/00
A 61 L   2/00
A 45 C  11/04

Der vorliegende Recherchenbericht wurde für alle Patentansprüche erstellt

| Recherchenort | Abschlußdatum der Recherche | Prüfer |
|---|---|---|
| DEN HAAG | 10-07-1989 | CALLEWAERT-HAEZEBROUCK H |